# EUROPEAN PATENT SPECIFICATION

(11) **EP 3 617 636 B1**
(45) Date of publication and mention of the grant of the patent: **16.06.2021**
(21) Application number: 19193398.5
(22) Date of filing: 23.08.2019
(51) Int. Cl.: F25D 29/00

(54) **A REFRIGERATION DEVICE COMPRISING A FERMENTATION COMPARTMENT AND AN OPERATION METHOD THEREOF**
EINE KÜHLVORRICHTUNG AUFWEISEND EINE GÄRUNGSKAMMER UND EIN BETRIEBSVERFAHREN DAFÜR
UN DISPOSITIF DE REFROIDISSEMENT AYANT UN COMPARTIMENT DE FERMENTATION ET SON PROCÉDÉ D'OPÉRATION

(30) Priority: 31.08.2018 TR 201812406
(43) Date of publication of application: 04.03.2020
(73) Proprietor: Vestel Beyaz Esya Sanayi ve Ticaret A.S., 45030 Manisa (TR)
(72) Inventor: DONER, Filiz, 45030 Manisa (TR); KENAR, Gozde, 45030 Manisa (TR)
(74) Representative: Cayli, Hülya

(56) References cited:
- CN-A- 108 342 270
- JP-A- H05 328 886
- JP-A- S61 271 949
- US-A- 5 476 672
- US-A- 6 063 420
- US-A1- 2002 134 545
- US-A1- 2006 228 444
- US-A1- 2006 247 967
- US-A1- 2017 298 311

## Description

### Technical Field

The present invention relates to refrigeration devices enabling fermented products to be obtained, and operation methods thereof.

### Background of the Invention

Refrigeration devices are used to store products (especially food products) at a certain temperature range, wherein such refrigeration devices generally comprise at least one refrigeration compartment that operates at a temperature within the range of 0°C to 8°C, and at least one freezer compartment that operates at a temperature below 0°C. In addition, in order for said compartments to operate at related temperatures, the refrigeration device basically comprises a refrigeration cycle assembly which has at least one compressor, at least one condenser and at least one evaporator.

In addition to many products, said refrigeration devices are used especially to store products which are obtained by fermentation and may spoil fast and easily outside the storing temperatures (e.g. yoghurt, beer, pickle, bread dough, kephir, wine, vinegar etc.), and a user provides required fermentation conditions at an area to obtain the fermented product, and then places the product at a refrigeration device. For instance, in published document no. US2017/298311A1, a device for rapid fermentation is disclosed. The device comprises a container for housing an amount of a carbohydrate solution therein, an atomizer coupled to the container and converting the carbohydrate solution into an aerosol suspension of particles that is emitted into a first chamber, a first panel separating the first chamber from a second chamber including a fermentation agent thereon. In this document, it is stated that the carbohydrate solution is emitted as the aerosol suspension of particles into the first chamber and onto the first panel such that the carbohydrate solution is fermented by the fermentation agent. In addition, the carbohydrate solution is collected in the second chamber and is returned to the atomizer until the carbohydrate solution has been fermented to a desired state.

However, if user keeps the fermented product outside the refrigeration device more than a required time period, the fermented product may spoil or if he/she keeps the product outside the refrigeration device less than required, the fermented product may not be fermented as necessary. In order to solve said problem, the prior art includes refrigeration devices which comprise at least one compartment enabling a fermentation process to be performed. In the published prior art document no. US2002/134545A1, an exemplary embodiment of a such refrigeration device is disclosed. The refrigerator of this document can be a kimchi refrigerator and comprises a chamber; a temperature adjuster adjusting the temperature inside the chamber; a first temperature sensor approximately sensing the temperature inside the chamber; a second temperature sensor spaced from the first temperature sensor so as to sense the real temperature inside the chamber; and a controller controlling the temperature adjuster according to the temperature sensed by the second temperature sensor when the temperature sensed by the first temperature sensor is within predetermined temperature limits of the chamber and the temperature sensed by the second temperature sensor is not. Thanks to the invention given in this document, it is mentioned that the temperature inside the chamber is effectively controlled by an accurate and prompt sensing operation. Furthermore, it is also stated that, though one of the first and second temperature sensors is abnormal, it is possible to replace or repair the abnormal temperature sensor or to control the temperature adjuster by the other normal temperature sensor.

Similarly, in another published document US2006/228444A1, a fermentation apparatus, also can be a kimchi refrigerator is disclosed. The apparatus comprises a storage compartment which is formed with an accommodating space for storing food and at least one of a heating part and a cooling part to ferment the food in the storage compartment, a sensor to sense a fermentation level of the food; an input part comprising a memory button allowing to memorize the fermentation level in a state that the food is fermented to an extent that a user wants to memorize; and a controller to control operation of at least one of the heating part and the cooling part, and store a fermentation value from the sensor as a custom fermentation value if the memory button is selected.

However, in case an interruption (e.g. power failure for a certain time period, malfunctioning of the refrigeration device) occurs in these refrigeration devices during the fermentation process, spoilage would be possible for the product being subjected to the fermentation process. In that case, if the user is not informed about such a situation, he/she may consume the spoiled fermented product accidentally, which may cause various health-related issues.

### Brief Description of the Invention

According to the present invention, the operation method for a refrigeration device, which comprises at least one compartment suitable for obtaining a fermented product by performing a fermentation process; at least one refrigeration cycle assembly for operating said compartment at a desired temperature range; and at least one control unit which comprises, regarding at least one fermented product, information of a fermentation temperature value and information of a storage temperature value at which the fermented product is required to be stored when the fermentation process is completed, and which enables a temperature of the compartment to be adjusted according to said information, comprises the steps of:
- determining, by a user, information of the fermented product to be obtained by means of a control element in connection with the control unit;
- adjusting a temperature of the compartment to be at the fermentation temperature value associated with the determined fermented product, and by this way, initiating the fermentation process;
- measuring a temperature of the compartment via at least one thermometer and sending the same to control unit when a problem occurs in the refrigeration device following initiation of the fermentation process;
- during time period of problem occurred, comparing by the control unit the measured temperature value of the compartment with a first temperature value associated with the determined fermented product and different from the fermentation temperature value;
- when a temperature value of the compartment is at the first temperature value or at a lower value than the first temperature value for a first time period associated with the determined fermented product or for a longer time period than the first time period, detecting that fermentation process cannot take place properly and therefore the fermented product will not be suitable for consumption; and
- in accordance with this detection, warning the user by a warning unit of the refrigeration device which is in connection with the control unit, the method further comprising the steps of:
   - subjecting the compartment, in which fermentation process is to be performed, to a preheating/ cooling process before initiation of the fermentation process, and thus, adjusting temperature of the compartment to the temperature which is suitable for the fermentation process wherein the preheating/cooling process comprises the steps of:
      - after the fermented product to be obtained is determined by means of the control element, measuring temperature of the compartment by said thermometer and sending the same to the control unit before the mixture through which the fermented product is to be obtained is placed at the compartment;
      - after that, comparing, by the control unit, this measured temperature value with a second temperature value and a third temperature value that is higher than the second temperature value;
      - enabling, by the control unit, temperature of the compartment to be brought to the third temperature value if the measured temperature value is equal to or lower than the second temperature value;
      - and enabling, by the control unit, temperature of the compartment to be brought to the second temperature value if the measured temperature value is equal to or higher than the third temperature value; and wherein the second temperature value and the third temperature value constitute fermentation temperature range of the determined fermented product for the fermentation process;
   - operating a heater of the refrigeration device in order to bring temperature of the compartment to the third temperature value, and avoiding the refrigeration cycle assembly from performing the refrigerating process; and
   - placing the mixture at the compartment for fermentation process when temperature of the compartment reaches to the third temperature value.

The refrigeration device according to the invention comprises at least one compartment suitable for obtaining a fermented product by performing a fermentation process; at least one refrigeration cycle assembly for operating said compartment at a desired temperature range; at least one thermometer measuring a temperature of the compartment; and at least one control unit which comprises, regarding at least one fermented product, information of a fermentation temperature value and information of a storage temperature value at which the fermented product is required to be stored when the fermentation process is completed, which enables a temperature of the compartment to be adjusted according to said information, which receives, by means of a control element, information of the fermented product to be obtained that is determined by a user, which adjusts operation of the refrigeration cycle assembly so that a temperature of the compartment is at the fermentation temperature value associated with the determined fermented product, and by this way, initiates the fermentation process, which detects a temperature of the compartment via the thermometer when a problem occurs in the refrigeration device following initiation of the fermentation process, which, during time period of problem occurred, compares the measured temperature value of the compartment with a first temperature value associated with the determined fermented product and different from the fermentation temperature value, which, when a temperature value of the compartment is determined, as a result of this comparison, to be at the first temperature value or at a lower value than the first temperature value for a first time period associated with the determined fermented product or for a longer time period than the first time period, detects that fermentation process cannot occur properly and therefore the fermented product will not be suitable for consumption, and which warns the user by means of at least one warning unit of the refrigeration device, which lets the compartment, in which fermentation process is to be performed, being subjected to a preheating/cooling process before initiation of the fermentation process, and thus, adjusts temperature of the compartment to the temperature which is suitable for the fermentation process, during preheating/cooling process, after the fermented product to be obtained is determined by means of the control element, which receives temperature of the compartment measured by said thermometer before the mixture through which the fermented product is to be obtained is placed at the compartment, compares this measured temperature value with a second temperature value and a third temperature value that is higher than the second temperature value, enables the temperature of the compartment to be brought to the third temperature value if the measured temperature value is equal to or lower than the second temperature value and enables the temperature of the compartment to be brought to the second temperature value if the measured temperature value is equal to or higher than the third temperature value, wherein the second temperature value and the third temperature value constitute fermentation temperature range of the determined fermented product for the fermentation process, which operates a heater of the refrigeration device in order to bring temperature of the compartment to the third temperature value, and avoids the refrigeration cycle assembly from performing the refrigerating process.

Thanks to the refrigeration device and operation method according to the invention, fermentation process for obtaining a fermented product is enabled to be performed inside the refrigeration device, and need for placing the obtained fermented product at the refrigeration device after completion of the fermentation process is able to be eliminated. In addition, a possible problem that may occur at the refrigeration device is able to be monitored and if this process includes an active fermentation process, it is able to be detected whether the fermentation process is affected negatively by the problem occurred. Therefore, user is avoided from consuming a spoiled fermented product and an efficient, effective and reliable refrigeration device and operation method are achieved.

### Object of the Invention

An object of the present invention is to provide a refrigeration device comprising a compartment suitable for performing a fermentation process to obtain a fermented product, and an operation method thereof.

Another object of the present invention is to provide a refrigeration device for warning a user as necessary by detecting a problem that occurs during a fermentation process, and an operation method thereof.

A further object of the present invention is to provide an efficient, effective and reliable refrigeration device and an operation method thereof.

### Description of the Invention

Fermented products (e.g. yoghurt, kephir etc.) are obtained by being kept at a certain temperature range for a certain time period; and after that time period, they should be kept at another certain temperature range for consumption without spoiling. Though refrigeration devices are commonly used to store products without spoiling which are obtained by a fermentation process, negative cases may occur such as spoilage of fermented product, if a user forgets to place the product obtained by fermentation process at the refrigeration device. In order to eliminate said problem, the prior art includes refrigeration devices which have at least one compartment enabling a fermentation process to be performed, wherein the user places a mixture, which is to be subjected to a fermentation process and provides the fermented product, at this compartment; and after completion of the time period required for fermentation process, temperature of that compartment is adjusted to be at a temperature at which related fermented product should be stored. By this way, need for monitoring the fermentation process by the user is reduced and problems as forgetting to place the product at the refrigeration device after the fermentation process can be avoided. However, said refrigeration devices fail to warn the user concerning the fermentation process as a result of a negative situation (e.g. power failure for a certain time period) that may occur during the fermentation process; and since the fermentation process does not take place properly in this case, user may consume a spoiled fermented product accidentally, which may affect health of the user negatively. Within this context, the present invention provides a refrigeration device for solving said problems, and an operation method thereof.

According to the present invention, the operation method for a refrigeration device, which comprises at least one compartment (this compartment may be a refrigeration compartment, a freezer compartment of the refrigeration devices covered by the known art and/or a compartment specific to the fermentation process which is separate from the mentioned compartments) suitable for obtaining a fermented product (e.g. yoghurt, beer, pickle, bread dough, kephir, wine, vinegar etc.) by performing a fermentation process; at least one refrigeration cycle assembly (this assembly preferably comprises at least one compressor, at least one condenser and at least one evaporator) for operating said compartment at a desired temperature range; and at least one control unit which comprises, regarding at least one (preferably more than one) fermented product, information of a fermentation temperature value (the fermentation temperature value may be a value between a second temperature value and a third temperature value that is higher than the second temperature value, while it may be a constant value), information of a storage temperature value (or a storage temperate range) at which the fermented product is required to be stored when the fermentation process is completed, and preferably information of a fermentation process time (these information are preferably provided as a table corresponding to the related fermented product), and which enables a temperature of the compartment to be adjusted according to said information, comprises the steps of: determining, by a user, information of the fermented product to be obtained by means of a control element in connection with the control unit, and preferably, sending by the user a command to the control unit concerning initiation of the fermentation process; adjusting a temperature of the compartment to be at the fermentation temperature value associated with the determined fermented product, and by this way, initiating the fermentation process; measuring a temperature of the compartment via at least one thermometer and sending the same to control unit when a problem (e.g. when a power cut occurs or the refrigeration device malfunctions etc.) which may preferably affect operating temperature of said compartment occurs in the refrigeration device following initiation of the fermentation process (the thermometer preferably measures temperature of the compartment continuously with a certain time period (e.g. momentarily) from the time refrigeration device starts to operate or after the fermentation process has started, and sends the same to the control unit); during time period of problem occurred, comparing by the control unit the measured temperature value of the compartment with a first temperature value associated with the determined fermented product and different from the fermentation temperature value (the first temperature value is such a temperature value that prevents fermentation process from taking place properly); when a temperature value of the compartment is at the first temperature value or at a lower value than the first temperature value for a first time period associated with the determined fermented product or for a longer time period than the first time period, detecting that fermentation process cannot take place properly and therefore the fermented product will not be suitable for consumption; and in accordance with this detection, warning the user by a warning unit of the refrigeration device which is in connection with the control unit.

According to the present invention, the user determines by means of said control element the fermented product that it desires to obtain, and the control unit allows the compartment to reach the fermentation temperature value associated with the determined fermented product via the refrigeration cycle assembly. While time period of the fermentation process for obtaining determined fermented product (i.e. fermentation time) may be a predetermined time period stored in the control unit, it may also be determined by the user via the control element. When temperature of the compartment reaches the fermentation temperature value or when user sends by means of said control element a command to the control unit concerning initiation of the fermentation process (e.g. determining the fermented product or inputting an initiation command following determination of the fermented product), the control unit determines that the fermentation process has been initiated. After this determination, the control unit monitors whether a problem has occurred in the refrigeration device (e.g. a failure at the refrigeration cycle assembly, power cut etc.) regarding the compartment in which the fermentation process takes place (this monitoring process may be performed by monitoring whether power is supplied from the mains power to the refrigeration device, starting to measure by means of the thermometer temperature of the compartment while the fermentation process starts, comparing by the control unit the measured temperature value by the thermometer with the fermentation temperature value associated with the fermented product by a predetermined period throughout the fermentation process and controlling whether temperature of the compartment is different from the fermentation temperature value for a second time period). In case a problem occurs regarding the compartment in which the fermentation process takes place, the control unit compares temperature of the compartment with said first temperature value and determines whether temperature of the compartment is at the first temperature value or at a lower value than the first temperature value for the first time period or for a longer time period than the first time period. When temperature of the compartment is at the first temperature or at a lower temperature value for the first time period or for a longer time period, the user is warned by means of the warning unit that the fermentation process does not take place properly. Therefore, the user can be avoided from consuming a spoiled fermented product. For example, assuming that the fermented product is yoghurt, the first temperature value may be 30°C and the first time period may be 1 hour; assuming that the fermented product is bread dough, the first temperature value may be 20°C and the first time period may be 1 hour; assuming that the fermented product is kephir, the first temperature value may be 10°C and the first time period may be 2 hours; and assuming that the fermented product is beer or pickle or wine or vinegar, the first temperature value may be 10°C and the first time period may be 24 hours (one day). In this case, for example, when the user desires to make kephir and a power cut occurs during fermentation process that takes place for obtaining the kephir (the refrigeration device has at least one battery in order for the control unit to perform comparing process and in order for the thermometer to measure temperature of the compartment, in case a power failure occurs), the fermentation process will not take place properly and a convenient kephir will not be obtained if temperature of the compartment in which fermentation process takes place remains at 10°C or lower than 10°C for 2 hours or longer. For that reason, when such a condition occurs, the user is warned audibly and/or visually by the warning unit and may be informed that the fermentation process did not take place properly. In another exemplary embodiment, in case a failure occurs at the evaporator which allows the compartment to be cooled, temperature of the compartment may increase (e.g. a heater for keeping the compartment at the fermentation temperature may operate continuously) and exceed the fermentation temperature value. In this case, when temperature of the compartment reaches a fourth temperature value (e.g. 72°C), a protective unit of the refrigeration device (e.g. a thermal circuit breaker unit that stops operation of the heater by de-energizing it) may decrease the temperature.

The operation method according to the present invention also preferably comprises the steps of: starting to count by means of a time counter the fermentation time period associated with the determined fermented product, after initiation of the fermentation process, to complete the fermentation process and bringing temperature of the compartment to the storage temperature associated with the determined fermented product when the fermentation time period is completed, and preferably, controlling by the user temperature of the compartment to be at the storage temperature by means of the control element until fermentation process is completed. For example, assuming that the fermented product is yoghurt, fermentation temperature value may be a value within the range of 44°C to 48°C, the fermentation period may be 4 hours and storage temperature value may be 4°C; assuming that the fermented product is bread dough, fermentation temperature value may be a value within the range of 38°C to 42°C, the fermentation period may be 3 hours (in this example, preferably, no intervention is made to temperature of the compartment when fermentation process is completed); assuming that the fermented product is kephir, fermentation temperature value may be a value within the range of 22°C to 25°C, the fermentation period may be 24 hours and storage temperature value may be 4°C; assuming that the fermented product is beer or pickle, fermentation temperature value may be a value within the range of 19°C to 22°C, the fermentation period may be 14 days and storage temperature value may be 4°C; or assuming that the fermented product is wine or vinegar, fermentation temperature value may be a value within the range of 24°C to 27°C, the fermentation period may be 14 days and storage temperature value may be 4°C. In this case, for example, when the user desires to make a wine, temperature value of the compartment is controlled to be at a value within the range of 24°C to 27°C for the fermentation process, and temperature value of the compartment is ensured to be at that range for 14 days. In addition, after time counter counts 14 days, temperature of the compartment is decreased to 4°C and controlled to be at 4°C unless the user makes any change. For example, if a freezer compartment of the refrigeration device is determined during manufacturing process as the compartment in which fermentation process is to be performed; after the user performs fermentation process at the freezer compartment, temperature of the freezer compartment is controlled to be at the storage temperature value that is determined for storing the fermented product until fermentation process is completed. When user completes the fermentation process, temperature of the freezer compartment is controlled such that it is adjusted according to the temperature value that is determined for the freezer compartment to operate as a freezer compartment.

According to the present invention, the operation method according to the present invention comprises steps of subjecting the compartment, in which fermentation process is to be performed, to a preheating/cooling process before initiation of the fermentation process, and thus, adjusting temperature of the compartment to the temperature which is suitable for the fermentation process. In this step, after the user determines the fermented product he/she desires to obtain by means of the control element, temperature of the compartment is measured by said thermometer and sent to the control unit before mixture through which the fermented product is to be obtained is placed at the compartment. After that, the control unit compares this measured temperature value with a second temperature value and a third temperature value that is higher than the second temperature value. If the measured temperature value is equal to or lower than the second temperature value, the control unit enables temperature of the compartment to be brought to the third temperature value; and if the measured temperature value is equal to or higher than the third temperature value, the control unit enables temperature of the compartment to be brought to the second temperature value. Following this temperature adjustment, the fermentation process is initiated. In this embodiment, the second temperature value and the third temperature value constitute fermentation temperature range of the determined fermented product for the fermentation process, and the fermentation process is performed within the range of the second temperature value and the third temperature value. Within this context, in order to bring temperature of the compartment to the third temperature value, a heater of the refrigeration device (the heater is such a type that enables defrosting process to be performed at the evaporator) is operated, thus avoiding the refrigeration cycle assembly from performing the refrigerating process (e.g. operation of the compressor is ceased). When temperature of the compartment reaches to the third temperature value, the mixture is placed at the compartment for fermentation process, and preferably the fermentation process is initiated with a command issued by the user by means of the control element. During fermentation process, temperature of the compartment is enabled to be within the range of the second temperature value and the third temperature value, and for this, the heater is stopped and the refrigeration cycle assembly is preferably activated to cool the compartment already having the third temperature value to the second temperature value, and when temperature of the compartment reaches the second temperature value, the heater is re-operated and operation of the refrigeration cycle assembly is avoided. Therefore, cycle between the second temperature value and the third temperature value is maintained during the fermentation time period. For the preheating/cooling process, a heater of the refrigeration device is avoided from operating in order to bring temperature of the compartment to the second temperature value, and the refrigeration cycle assembly is activated to perform refrigeration process (e.g. the compressor is operated). When temperature of the compartment reaches the second temperature value, the mixture is placed at the compartment for fermentation process, and preferably the fermentation process is initiated with a command issued by the user by means of the control element. During fermentation process, temperature of the compartment is enabled to be within the range of the second temperature value and the third temperature value, and for this, the heater is operated and the refrigeration cycle assembly is stopped to heat the compartment already having the second temperature value to the third temperature value, and when temperature of the compartment reaches the third temperature value, the heater is stopped and the refrigeration cycle assembly is re-activated. Therefore, cycle between the second temperature value and the third temperature value is maintained during the fermentation time period. Thanks to such a preheating/cooling process, required time period for fermentation process is able to be minimised and efficiency of fermentation process is able to be increased.

The refrigeration device according to the present invention comprises at least one compartment suitable for obtaining a fermented product (e.g. yoghurt, beer, pickle, bread dough, kephir, wine, vinegar etc.) by performing a fermentation process; at least one refrigeration cycle assembly for operating said compartment at a desired temperature range (this assembly preferably comprises at least one compressor, at least one condenser and at least one evaporator); and at least one thermometer measuring a temperature of the compartment; the refrigeration device further comprising at least one control unit which:
comprises, regarding at least one fermented product, information of a fermentation temperature value (the fermentation temperature value may be a value between a second temperature value and a third temperature value that is higher than the second temperature value, while it may be a constant value), information of a storage temperature value (or a storage temperate range) at which the fermented product is required to be stored when the fermentation process is completed, and preferably information of a fermentation process time (the control unit preferably has at least one memory unit which includes said information), which enables a temperature of the compartment to be adjusted according to said information, which receives, by means of a control element, information of the fermented product to be obtained that is determined by a user and preferably a command for initiating fermentation process, which adjusts operation of the refrigeration cycle assembly so that a temperature of the compartment is at the fermentation temperature value associated with the determined fermented product, and by this way, initiates the fermentation process, which detects a temperature of the compartment via the thermometer when a problem (e.g. when a power cut occurs or the refrigeration device malfunctions etc.) which may preferably affect operating temperature of said compartment occurs in the refrigeration device following initiation of the fermentation process, which, during time period of problem occurred, compares the measured temperature value of the compartment with a first temperature value associated with the determined fermented product and different from the fermentation temperature value (the first temperature value is such a temperature value that prevents fermentation process from taking place properly), which, when a temperature value of the compartment is determined, as a result of this comparison, to be at the first temperature value or at a lower value than the first temperature value for a first time period associated with the determined fermented product or for a longer time period than the first time period, detects that fermentation process cannot occur properly and therefore the fermented product will not be suitable for consumption, and which warns the user by means of at least one warning unit of the refrigeration device, which lets the compartment, in which fermentation process is to be performed, being subjected to a preheating/ cooling process before initiation of the fermentation process, and thus, adjusts temperature of the compartment to the temperature which is suitable for the fermentation process, during preheating/ cooling process, after the fermented product to be obtained is determined by means of the control element, which receives temperature of the compartment measured by said thermometer before the mixture through which the fermented product is to be obtained is placed at the compartment, compares this measured temperature value with a second temperature value and a third temperature value that is higher than the second temperature value, enables the temperature of the compartment to be brought to the third temperature value if the measured temperature value is equal to or lower than the second temperature value and enables the temperature of the compartment to be brought to the second temperature value if the measured temperature value is equal to or higher than the third temperature value, wherein the second temperature value and the third temperature value constitute fermentation temperature range of the determined fermented product for the fermentation process, which operates a heater of the refrigeration device in order to bring temperature of the compartment to the third temperature value, and avoids the refrigeration cycle assembly from performing the refrigerating process.

In a preferred embodiment of the invention, the compartment suitable for obtaining a fermented product by performing a fermentation process may be a refrigeration compartment of the refrigeration device which operates at a temperature within the range of 0°C to 5°C and/or a freezer compartment of the refrigeration device which operates at a temperature below 0°C. In another alternative embodiment, the refrigeration device may comprise for the fermentation process a compartment specific to the fermentation process which is separate from the refrigeration compartment and freezer compartment. In both embodiments, in addition to the refrigeration cycle assembly, the refrigeration device preferably comprises at least one compressor and at least one evaporator in connection with the control unit, suitable for use during the fermentation process, and enabling temperature of the compartment, in which fermentation process is performed to be adjusted and controlled correspondingly for fermentation process (i.e. as mentioned above). Therefore, the refrigeration device is enabled to continue normal refrigeration process during the fermentation process such that fermentation process is avoided from affecting the refrigeration device negatively, and a reliable and efficient refrigeration device is obtained.

According to the present invention, the refrigeration device at least one heater for adjusting and controlling temperature of the compartment for fermentation process. The heater is preferably such a type (e.g. peltier) that enables ice formed at the evaporator to defrost, thereby eliminating the need for providing an additional heater to the refrigeration device.

In another alternative embodiment, the warning unit enables a user to be warned audibly and/or visually, and for that reason, comprises at least one speaker and/or at least one illuminating element. Yet in another embodiment, the warning unit preferably comprises at least one indication device, wherein this indication device also preferably enables a fermentation process to be initiated and enables a user to be informed about progress of the process. The indication device preferably comprises a touch screen so that the warning unit may also be used as a control element.

In another exemplary embodiment, the refrigeration device according to the invention preferably comprises at least one battery for supplying energy to the control unit and the thermometer in the event of a power cut (e.g. a power failure).

Thanks to the refrigeration device and operation method according to the invention, fermentation process for obtaining a fermented product is enabled to be performed inside the refrigeration device, and need for placing the obtained fermented product at the refrigeration device after completion of the fermentation process is able to be eliminated. In addition, a possible problem that may occur at the refrigeration device is able to be monitored and if this process includes an active fermentation process, it is able to be detected whether the fermentation process is affected negatively by the problem occurred. Therefore, user is avoided from consuming a spoiled fermented product and an efficient, effective and reliable refrigeration device and operation method are achieved.

## Claims

1. An operation method for a refrigeration device, which comprises at least one compartment suitable for obtaining a fermented product by performing a fermentation process; at least one refrigeration cycle assembly for operating said compartment at a desired temperature range; and at least one control unit which comprises, regarding at least one fermented product, information of a fermentation temperature value and information of a storage temperature value at which the fermented product is required to be stored when the fermentation process is completed, and which enables a temperature of the compartment to be adjusted according to said information, the operation method comprises the steps of:
• determining, by a user, information of the fermented product to be obtained by means of a control element in connection with the control unit;
• adjusting a temperature of the compartment to be at the fermentation temperature value associated with the determined fermented product, and by this way, initiating the fermentation process;
• measuring a temperature of the compartment via at least one thermometer and sending the same to the at least one control unit when a problem occurs in the refrigeration device following initiation of the fermentation process;
• during the time period when the problem occurred, comparing by the control unit the measured temperature value of the compartment with a first temperature value associated with the determined fermented product and different from the fermentation temperature value; **characterized in that**
• when a temperature value of the compartment is at the first temperature value or at a lower value than the first temperature value for a first time period associated with the determined fermented product or for a longer time period than the first time period, detecting that fermentation process cannot take place properly and therefore the fermented product will not be suitable for consumption; and
• in accordance with this detection, warning the user by a warning unit of the refrigeration device which is in connection with the control unit wherein the method further comprises the steps of:
• subjecting the compartment, in which fermentation process is to be performed, to a preheating/cooling process before initiation of the fermentation process, and thus, adjusting temperature of the compartment to the temperature which is suitable for the fermentation process wherein the preheating/cooling process comprises the steps of:
- after the fermented product to be obtained is determined by means of the control element, measuring temperature of the compartment by said thermometer and sending the same to the control unit before the mixture through which the fermented product is to be obtained is placed at the compartment;
- after that, comparing, by the control unit, this measured temperature value with a second temperature value and a third temperature value that is higher than the second temperature value;
- enabling, by the control unit, temperature of the compartment to be brought to the third temperature value if the measured temperature value is equal to or lower than the second temperature value;
- and enabling, by the control the temperature of the compartment to be brought to the second temperature value if the measured temperature value is equal to or higher than the third temperature value;
and wherein the second temperature value and the third temperature value constitute fermentation temperature range of the determined fermented product for the fermentation process;
• operating a heater of the refrigeration device in order to bring temperature of the compartment to the third temperature value, and avoiding the refrigeration cycle assembly from performing the refrigerating process; and
• placing the mixture at the compartment for fermentation process when temperature of the compartment reaches to the third temperature value.

2. A method according to Claim 1, **characterized in that** the control unit further comprises a fermentation process time associated with the determined fermented product.

3. A method according to Claim 1, **characterized in that** time period of the fermentation process to be performed for obtaining the fermented product is determined by the user by means of the control element.

4. A method according to Claim 1 or 2 or 3, **characterized by** comprising the steps of: starting to count by means of a time counter the fermentation time period associated with the determined fermented product, after initiation of the fermentation process, to complete the fermentation process and bringing temperature of the compartment to the storage temperature associated with the determined fermented product when the fermentation time period is completed.

5. A method according to Claim 4, **characterized by** comprising the step of controlling by the user temperature of the compartment to be at the storage temperature by means of the control element until fermentation process is completed.

6. A method according to Claim 1, **characterized by** comprising the steps of: during fermentation process, stopping the heater to cool the compartment already having the third temperature value to the second temperature value in order to enable temperature of the compartment to be within the range of second temperature value and third temperature value, re-operating the heater and avoiding the refrigeration cycle assembly from operating when temperature of the compartment reaches the second temperature value, and thus, maintaining the cycle between the second temperature value and the third temperature value during the fermentation time period.

7. A method according to Claim 1, **characterized by** comprising the steps of: avoiding a heater of the refrigeration device from operating in order to bring temperature of the compartment to the second temperature value and activating the refrigeration cycle assembly to perform refrigeration process; and placing the mixture at the compartment for fermentation process when temperature of the compartment is brought to the second temperature value.

8. A method according to Claim 1 or Claim 7, **characterized by** comprising the steps of: during fermentation process, operating the heater and stopping the refrigeration cycle assembly to heat the compartment already having the second temperature value to the third temperature value in order to enable temperature of the compartment to be within the range of the second temperature value and the third temperature value, stopping the heater and re-activating the refrigeration cycle assembly when temperature of the compartment reaches the third temperature value, and thus, maintaining the cycle between the second temperature value and the third temperature value during the fermentation time period.

9. A method according to Claim 1 or Claim 7, **characterized by** comprising the step of: initiating the fermentation process with a command issued by the user by means of the control element after placing the mixture at the compartment for fermentation process.

10. A refrigeration device comprising at least one compartment suitable for obtaining a fermented product by performing a fermentation process; at least one refrigeration cycle assembly for operating said compartment at a desired temperature range; at least one thermometer measuring a temperature of the compartment; and comprising at least one control unit which:
comprises, regarding at least one fermented product, information of a fermentation temperature value and information of a storage temperature value at which the fermented product is required to be stored when the fermentation process is completed,
which enables a temperature of the compartment to be adjusted according to said information,
which receives, by means of a control element, information of the fermented product to be obtained that is determined by a user,
which adjusts operation of the refrigeration cycle assembly so that a temperature of the compartment is at the fermentation temperature value associated with the determined fermented product, and by this way, initiates the fermentation process, which detects a temperature of the compartment via the thermometer when a problem occurs in the refrigeration device following initiation of the fermentation process,
which, during time period of problem occurred, compares the measured temperature value of the compartment with a first temperature value associated with the determined fermented product and different from the fermentation temperature value, **characterized by** the control unit which, when a temperature value of the compartment is determined, as a result of this comparison, to be at the first temperature value or at a lower value than the first temperature value for a first time period associated with the determined fermented product or for a longer time period than the first time period, detects that fermentation process cannot occur properly and therefore the fermented product will not be suitable for consumption,
which warns the user by means of at least one warning unit of the refrigeration device,
which lets the compartment, in which fermentation process is to be performed, being subjected to a preheating/cooling process before initiation of the fermentation process, and thus, adjusts temperature of the compartment to the temperature which is suitable for the fermentation process,
during preheating/cooling process, after the fermented product to be obtained is determined by means of the control element, which receives temperature of the compartment measured by said thermometer before the mixture through which the fermented product is to be obtained is placed at the compartment, compares this measured temperature value with a second temperature value and a third temperature value that is higher than the second temperature value, enables the temperature of the compartment to be brought to the third temperature value if the measured temperature value is equal to or lower than the second temperature value and enables the temperature of the compartment to be brought to the second temperature value if the measured temperature value is equal to or higher than the third temperature value, wherein the second temperature value and the third temperature value constitute fermentation temperature range of the determined fermented product for the fermentation process,
which operates a heater of the refrigeration device in order to bring temperature of the compartment to the third temperature value, and avoids the refrigeration cycle assembly from performing the refrigerating process.

11. A refrigeration device according to Claim 10, **characterized by** comprising, in addition to the refrigeration cycle assembly, at least one compressor and at least one evaporator in connection with the control unit, suitable for use during the fermentation process, and enabling temperature of the compartment, in which fermentation process is performed, to be adjusted and controlled correspondingly for fermentation process, and at least one heater for adjusting and controlling temperature of the compartment for fermentation process.

12. A refrigeration device according to Claim 10 or Claim 11, **characterized by** comprising at least one battery for supplying energy to the control unit and the thermometer in the event of a power cut.

## Patentansprüche

1. Betriebsverfahren für eine Kühlvorrichtung, die wenigstens ein Fach, das geeignet ist, um durch Ausführen eines Fermentationsprozesses ein fermentiertes Produkt zu erhalten, wenigstens einen Kühlzyklusaufbau zum Betreiben des Fachs in einem gewünschten Temperaturbereich, und wenigstens eine Steuereinheit aufweist, die hinsichtlich wenigstens eines fermentierten Produkts Information für einen Fermentationstemperaturwert und Information für einen Lagertemperaturwert enthält, bei dem das fermentierte Produkt gelagert werden muss, wenn der Fermentationsprozess abgeschlossen ist, und die es ermöglicht, eine Temperatur des Faches gemäß diesen Informationen einzustellen, wobei das Betriebsverfahren die Schritte aufweist:
• Bestimmen, durch einen Benutzer, von Informationen des zu erhaltenden fermentierten Produkts mittels eines Steuerelements in Verbindung mit der Steuereinheit,
• Einstellen einer Temperatur des Fachs auf einen dem bestimmten fermentierten Produkt zugeordneten Fermentationstemperaturwert und in dieser Weise Einleiten des Fermentationsprozesses,
• Messen einer Temperatur des Fachs über wenigstens ein Thermometer und Senden derselben zu der wenigstens einen Steuereinheit, wenn nach dem Start des Fermentationsprozesses ein Problem in der Kühlvorrichtung auftritt,
• während der Zeitperiode, in der das Problem auftrat, Vergleichen des gemessenen Temperaturwerts des Fachs mit einem ersten Temperaturwert durch die Steuereinheit, der dem bestimmten fermentierten Produkt zugeordnet ist und der sich von dem Fermentationstemperaturwert unterscheidet, **gekennzeichnet durch**
• wenn für eine erste dem bestimmten fermentierten Produkt zugeordnete Zeitperiode oder für eine längere Zeitperiode als die erste Zeitperiode ein Temperaturwert des Fachs bei dem ersten Temperaturwert oder einem niedrigeren Wert als dem ersten Temperaturwert liegt, Feststellen, dass der Fermentationsprozess nicht ordnungsgemäß stattfinden kann und dass daher das fermentierte Produkt nicht zum Verzehr geeignet sein wird, und
• bei Vorliegen dieser Feststellung Warnung des Benutzers durch eine Warneinheit der Kühlvorrichtung, die in Verbindung mit der Steuereinheit ist,
wobei das Verfahren weiterhin beinhaltet,
• das Fach, in dem der Fermentationsprozess ausgeführt werden soll, einem Vorheizungs-/Kühlungs-Prozess zu unterziehen, bevor der Fermentationsprozess eingeleitet wird, und daher die Temperatur des Fachs auf die Temperatur einzustellen, die für den Fermentationsprozess geeignet ist, wobei der Vorheizungs-/Kühlungs-Prozess beinhaltet,
- nachdem das zu erhaltende fermentierte Produkt mittels des Steuerelements bestimmt ist, die Temperatur des Fachs durch das Thermometer zu messen und dieselbe zu der Steuereinheit zu senden, bevor das Gemisch, aus dem das fermentierte Produkt zu erhalten ist, in dem Fach platziert wird,
- danach durch die Steuereinheit diesen gemessenen Temperaturwert mit einem zweiten Temperaturwert und einem dritten Temperaturwert, der höher als der zweite Temperaturwert ist, zu vergleichen,
- es durch die Steuereinheit zu bewirken, dass die Temperatur des Fachs auf den dritten Temperaturwert gebracht wird, wenn der gemessene Temperaturwert gleich oder kleiner als der zweite Temperaturwert ist,
- durch die Steuereinheit zu bewirken, dass die Temperatur des Fachs auf den zweiten Temperaturwert gebracht wird, wenn der gemessene Temperaturwert gleich oder größer als der dritte Temperaturwert ist,
und wobei der zweite Temperaturwert und der dritte Temperaturwert einen Fermentationstemperaturbereich des bestimmten fermentierten Produkts für den Fermentationsprozess definieren,
• eine Heizung der Kühlvorrichtung zu betreiben, um die Temperatur des Fachs auf den dritten Temperaturwert zu bringen, und zu verhindern, dass der Kühlungszyklusaufbau den Kühlungsprozess ausführt, und
• das Gemisch in dem Fach für den Fermentationsprozess zu platzieren, wenn die Temperatur des Fachs den dritten Temperaturwert erreicht.

2. Verfahren nach Anspruch 1, **dadurch gekennzeichnet, dass** die Steuereinheit weiter eine dem bestimmten Fermentationsprodukt zugeordnete Fermentationsprozesszeit enthält.

3. Verfahren nach Anspruch 1, **dadurch gekennzeichnet, dass** die Zeitperiode zur Ausführung des Fermentationsprozesses, um das fermentierte Produkt zu erhalten, durch den Benutzer mittels des Steuerelements bestimmt wird.

4. Verfahren nach Anspruch 1 oder 2 oder 3, **dadurch gekennzeichnet, dass** es die Schritte beinhaltet, nach dem Starten des Fermentationsprozesses mittels eines Zeitzählers die dem bestimmten fermentierten Produkt zugeordnete Fermentationszeitperiode zu zählen, um den Fermentationsprozess abzuschließen, und die Temperatur des Fachs auf die dem bestimmten fermentierten Produkt zugeordnete Lagertemperatur zu bringen, wenn die Fermentationszeitperiode abgelaufen ist.

5. Verfahren nach Anspruch 4, **dadurch gekennzeichnet, dass** es den Schritt beinhaltet, durch den Benutzer die Temperatur des Fachs mittels des Steuerelements zu steuern, damit sie auf der Lagertemperatur ist, bis der Fermentationsprozess abgeschlossen ist.

6. Verfahren nach Anspruch 1, **dadurch gekennzeichnet, dass** es die Schritte beinhaltet, während des Fermentationsprozesses die Heizung zu stoppen, um das Fach, das bereits den dritten Temperaturwert hat, auf den zweiten Temperaturwert abkühlen zu lassen, damit die Temperatur des Fachs innerhalb des Bereichs des zweiten Temperaturwerts und des dritten Temperaturwerts liegen kann, die Heizung wieder zu betreiben und Betrieb des Kühlungszyklusaufbaus zu vermeiden, wenn die Temperatur des Fachs den zweiten Temperaturwert erreicht, und daher während der Fermentationszeitperiode den Zyklus zwischen dem zweiten Temperaturwert und dem dritten Temperaturwert zu halten.

7. Verfahren nach Anspruch 1, **dadurch gekennzeichnet, dass** es die Schritte beinhaltet, den Betrieb einer Heizung der Kühlungsvorrichtung zu verhindern, um die Temperatur des Fachs auf den zweiten Temperaturwert zu bringen, und den Kühlungszyklusaufbau zu aktivieren, um einen Kühlungsprozess auszuführen, und das Gemisch in dem Fach für den Fermentationsprozess zu platzieren, wenn die Temperatur des Fachs auf den zweiten Temperaturwert gebracht ist.

8. Verfahren nach Anspruch 1 oder Anspruch 7, **dadurch gekennzeichnet, dass** es die Schritte beinhaltet, während des Fermentationsprozesses die Heizung zu betreiben und den Kühlungszyklusaufbau zu stoppen, um das Fach, das bereits den zweiten Temperaturwert hat, auf den dritten Temperaturwert aufzuheizen, damit die Temperatur des Fachs innerhalb des Bereichs des zweiten Temperaturwertes und des dritten Temperaturwertes liegen kann, die Heizung zu stoppen und den Kühlungszyklusaufbau wieder zu aktivieren, wenn die Temperatur des Faches den dritten Temperaturwert erreicht, und dadurch während der Fermentationszeitperiode den Zyklus zwischen dem zweiten Temperaturwert und dem dritten Temperaturwert zu halten.

9. Verfahren nach Anspruch 1 oder Anspruch 7, **dadurch gekennzeichnet, dass** es den Schritt beinhaltet, den Fermentationsprozess durch einen durch den Benutzer mittels des Steuerelements gegebenen Befehl zu starten, nachdem das Gemisch für den Fermentationsprozess in dem Fach platziert ist.

10. Kühlungsvorrichtung, die wenigstens ein Fach, das dazu geeignet ist, um durch Ausführen eines Fermentationsprozesses ein fermentiertes Produkt zu erhalten, wenigstens einen Kühlungszyklusaufbau zum Betreiben des Fachs in einem gewünschten Temperaturbereich, wenigstens ein Thermometer, das eine Temperatur des Faches misst, und wenigstens eine Steuereinheit aufweist,
die hinsichtlich wenigstens eines fermentierten Produkts Information eines Fermentationstemperaturwertes und Information eines Lagertemperaturwertes enthält, bei dem das fermentierte Produkt gelagert werden muss, wenn der Fermentationsprozess abgeschlossen ist,
die bewirkt, dass die Temperatur des Fachs gemäß der Information eingestellt wird,
die, mittels eines Steuerelements, Information über das zu erhaltende fermentierte Produkt empfängt, die durch einen Benutzer festgelegt wird,
die den Betrieb des Kühlungszyklusaufbaus einstellt, so dass eine Temperatur des Fachs bei dem Fermentationstemperaturwert liegt, der dem bestimmten fermentierten Produkt zugeordnet ist, und die auf diese Weise den Fermentationsprozess einleitet,
die über das Thermometer eine Temperatur des Fachs erfasst, wenn nach der Einleitung des Fermentationsprozesses ein Problem in der Kühlungsvorrichtung auftritt,
die, während der Zeitperiode des Auftretens des Problems, den gemessenen Temperaturwert des Faches mit einem ersten Temperaturwert, der dem bestimmten fermentierten Produkt zugeordnet ist und sich von dem Fermentationstemperaturwert unterscheidet, vergleicht, **gekennzeichnet durch** die Steuereinheit,
die, wenn als Ergebnis dieses Vergleichs für eine erste, dem bestimmten fermentierten Produkt zugeordnete oder längere Zeitperiode als die erste Zeitperiode ein Temperaturwert des Fachs bei dem ersten Temperaturwert oder einem niedrigeren als dem ersten Temperaturwert liegend festgestellt wird, festlegt, dass der Fermentationsprozess nicht ordnungsgemäß stattfinden kann und daher das fermentierte Produkt nicht zum Verzehr geeignet sein wird,
die den Benutzer mittels wenigstens einer Warneinheit der Kühlungsvorrichtung warnt,
die vor der Einleitung des Fermentationsprozesses das Fach, in dem der Fermentationsprozess ausgeführt werden soll, einem Vorheizungs-/Kühlungs-Prozess unterzieht und daher die Temperatur des Fachs auf die Temperatur einstellt, die für den Fermentationsprozess geeignet ist,
die während des Vorheizungs-/Kühlungs-Prozesses, nachdem das zu erhaltende fermentierte Produkt mittels des Steuerelements bestimmt ist, die durch das Thermometer gemessene Temperatur des Fachs empfängt, bevor das Gemisch, aus dem das fermentierte Produkt erhalten werden soll, in dem Fach platziert wird, diesen gemessenen Temperaturwert mit einem zweiten Temperaturwert und einem dritten Temperaturwert, der höher als der zweite Temperaturwert ist, vergleicht, die bewirkt, dass die Temperatur des Fachs auf den dritten Temperaturwert gebracht wird, wenn der gemessene Temperaturwert gleich oder kleiner als der zweite Temperaturwert ist, und die bewirkt, dass die Temperatur des Fachs auf den zweiten Temperaturwert gebracht wird, wenn der gemessene Temperaturwert gleich oder größer als der dritte Temperaturwert ist, wobei der zweite Temperaturwert und der dritte Temperaturwert den Fermentationstemperaturbereich des für den Fermentationsprozess bestimmten fermentierten Produkts definieren, die eine Heizung der Kühlungsvorrichtung bestreibt, um die Temperatur des Fachs auf einen dritten Temperaturwert zu bringen, und die es vermeidet, dass der Kühlungszyklusaufbau den Kühlungsprozess ausführt.

11. Kühlungsvorrichtung nach Anspruch 10, **dadurch gekennzeichnet, dass** sie zusätzlich zu dem Kühlungszyklusaufbau wenigstens einen Kompressor und wenigstens einen Verdampfer in Verbindung mit der Steuereinheit, die zur Anwendung während des Fermentationsprozesses geeignet sind und die bewirken, dass die Temperatur des Fachs, in dem der Fermentationsprozess aufgeführt wird, entsprechend dem Fermentationsprozess eingestellt und kontrolliert wird, und wenigstens eine Heizung zum Einstellen und Kontrollieren der Temperatur des Fachs für den Fermentationsprozess aufweist.

12. Kühlungsvorrichtung nach Anspruch 10 oder Anspruch 11, **dadurch gekennzeichnet, dass** sie wenigstens eine Batterie zur Energieversorgung der Steuereinheit und des Thermometers im Fall eines Stromausfalls aufweist.

## Revendications

1. Procédé d'opération pour un dispositif de refroidissement, qui comprend au moins un compartiment approprié pour obtenir un produit fermenté en réalisant un processus de fermentation ; au moins un ensemble de cycle de refroidissement pour faire opérer ledit compartiment à une plage de température souhaitée ; et au moins une unité de commande qui comprend, concernant au moins un produit fermenté, des informations d'une valeur de température de fermentation et des informations d'une valeur de température de stockage à laquelle le produit fermenté doit être stocké lorsque le processus de fermentation est complété, et qui permet à une température du compartiment d'être ajustée selon lesdites informations, le procédé d'opération comprend les étapes consistant à :
• déterminer, par un utilisateur, les informations du produit fermenté à obtenir au moyen d'un élément de commande en connexion avec l'unité de commande ;
• ajuster une température du compartiment pour qu'elle soit à la valeur de température de fermentation associée au produit fermenté déterminé, et de cette façon, initier le processus de fermentation ;
• mesurer une température du compartiment par l'intermédiaire d'au moins un thermomètre et envoyer celle-ci à ladite au moins une unité de commande lorsqu'un problème survient dans le dispositif de refroidissement après l'initiation du processus de fermentation ;
• pendant la période où le problème est apparu, comparer par l'unité de commande la valeur de température mesurée du compartiment avec une première valeur de température associée au produit fermenté déterminé et différente de la valeur de température ; **caractérisé en ce que**
• lorsqu'une valeur de température du compartiment est à la première valeur de température ou à une valeur inférieure à la première valeur de température pendant une première période associée au produit fermenté déterminé ou pendant une période plus longue que la première période, détecter que le processus de fermentation ne peut pas se dérouler correctement et que, par conséquent, le produit fermenté ne sera pas approprié à la consommation ; et
• en fonction de cette détection, avertir l'utilisateur par une unité d'avertissement du dispositif de refroidissement qui est en connexion avec l'unité de commande, dans lequel le procédé comprend en outre les étapes consistant à :
• soumettre le compartiment, dans lequel le processus de fermentation doit être réalisé, à un processus de préchauffage/refroidissement avant l'initiation du processus de fermentation, et ainsi, ajuster la température du compartiment à la température qui est appropriée pour le processus de fermentation, dans lequel le processus de préchauffage/refroidissement comprend les étapes consistant à :
- après avoir déterminé le produit fermenté à obtenir au moyen de l'élément de commande, mesurer la température du compartiment au moyen dudit thermomètre et envoyer celle-ci à l'unité de commande avant que le mélange par lequel le produit fermenté doit être obtenu ne soit placé dans le compartiment ;
- ensuite, comparer, par l'unité de commande, cette valeur de température mesurée avec une deuxième valeur de température et une troisième valeur de température qui est supérieure à la deuxième valeur de température ;
- permettre, par l'unité de commande, d'amener la température du compartiment à la troisième valeur de température si la valeur de température mesurée est égale ou inférieure à la deuxième valeur de température ;
- et permettre, par l'unité de commande, la température du compartiment d'être amenée à la deuxième valeur de température si la valeur de température mesurée est égale ou supérieure à la troisième valeur de température ;
et dans lequel la deuxième valeur de température et la troisième valeur de température constituent la plage de température de fermentation du produit fermenté déterminé pour le processus de fermentation ;
• faire opérer un dispositif de chauffage du dispositif de refroidissement afin d'amener la température du compartiment à la troisième valeur de température, et éviter que l'ensemble de cycle de refroidissement n'effectue le processus de refroidissement ; et
• placer le mélange dans le compartiment pour le processus de fermentation lorsque la température du compartiment atteint la troisième valeur de température.

2. Procédé selon la revendication 1, **caractérisé en ce que** l'unité de commande comprend en outre un temps de processus de fermentation associé au produit fermenté déterminé.

3. Procédé selon la revendication 1, **caractérisé en ce que** la période du processus de fermentation à réaliser pour obtenir le produit fermenté est déterminée par l'utilisateur au moyen de l'élément de commande.

4. Procédé selon la revendication 1 ou 2 ou 3, **caractérisé en ce qu'il** comprend les étapes consistant à : commencer à compter, au moyen d'un compteur de temps, la période de fermentation associée au produit fermenté déterminé, après l'initiation du processus de fermentation, pour compléter le processus de fermentation et amener la température du compartiment à la température de stockage associée au produit fermenté déterminé lorsque la période de fermentation est complétée.

5. Procédé selon la revendication 4, **caractérisé en ce qu'il** comprend l'étape consistant à commander par l'utilisateur une température du compartiment pour qu'elle soit à la température de stockage au moyen de l'élément de commande jusqu'à ce que le processus de fermentation soit complété.

6. Procédé selon la revendication 1, **caractérisé en ce qu'il** comprend les étapes consistant à : pendant le processus de fermentation, arrêter le dispositif de chauffage pour refroidir le compartiment ayant déjà la troisième valeur de température à la deuxième valeur de température afin de permettre à la température du compartiment d'être dans la plage de la deuxième valeur de température et de la troisième valeur de température, réopérer le dispositif de chauffage et éviter que l'ensemble de cycle de refroidissement n'opère lorsque la température du compartiment atteint la deuxième valeur de température, et ainsi, maintenir le cycle entre la deuxième valeur de température et la troisième valeur de température pendant la période de fermentation.

7. Procédé selon la revendication 1, **caractérisé en ce qu'il** comprend les étapes consistant à : éviter qu'un dispositif de chauffage du dispositif de refroidissement n'opère afin d'amener la température du compartiment à la deuxième valeur de température et activer l'ensemble de cycle de refroidissement pour effectuer le processus de refroidissement ; et placer le mélange dans le compartiment pour le processus de fermentation lorsque la température du compartiment est amenée à la deuxième valeur de température.

8. Procédé selon la revendication 1 ou la revendication 7, **caractérisé en ce qu'il** comprend les étapes consistant à : pendant le processus de fermentation, faire opérer le dispositif de chauffage et arrêter l'ensemble de cycle de refroidissement pour chauffer le compartiment ayant déjà la deuxième valeur de température à la troisième valeur de température afin de permettre à la température du compartiment d'être dans la plage de la deuxième valeur de température et de la troisième valeur de température, arrêter le dispositif de chauffage et réactiver l'ensemble de cycle de refroidissement lorsque la température du compartiment atteint la troisième valeur de température, et ainsi, maintenir le cycle entre la deuxième valeur de température et la troisième valeur de température pendant la période de fermentation.

9. Procédé selon la revendication 1 ou la revendication 7, **caractérisé en ce qu'il** comprend l'étape consistant à : initier le processus de fermentation avec une commande émise par l'utilisateur au moyen de l'élément de commande après avoir placé le mélange dans le compartiment pour le processus de fermentation.

10. Dispositif de refroidissement comprenant au moins un compartiment approprié pour obtenir un produit fermenté en réalisant un processus de fermentation ; au moins un ensemble de cycle de refroidissement pour faire opérer ledit compartiment à une plage de température souhaitée ; au moins un thermomètre mesurant une température du compartiment ; et comprenant au moins une unité de commande qui :
comprend, concernant au moins un produit fermenté, des informations d'une valeur de température de fermentation et des informations d'une valeur de température de stockage à laquelle le produit fermenté doit être stocké lorsque le processus de fermentation est complété,
qui permet d'ajuster une température du compartiment en fonction desdites informations,
qui reçoit, au moyen d'un élément de commande, des informations du produit fermenté à obtenir qui est déterminée par un utilisateur,
qui ajuste l'opération de l'ensemble de cycle de refroidissement de sorte qu'une température du compartiment soit à la valeur de température de fermentation associée au produit fermenté déterminé, et de cette façon, initie le processus de fermentation,
qui détecte une température du compartiment par l'intermédiaire du thermomètre lorsqu'un problème se produit dans le dispositif de refroidissement après l'initiation du processus de fermentation,
qui, pendant la période où le problème se produit, compare la valeur de température mesurée du compartiment avec une première valeur de température associée au produit fermenté déterminé et différente de la valeur de température de fermentation, **caractérisé par** l'unité de commande,
qui, lorsqu'une valeur de température du compartiment est déterminée, à la suite de cette comparaison, comme étant à la première valeur de température ou à une valeur inférieure à la première valeur de température pendant une première période associée au produit fermenté déterminé ou pendant une période plus longue que la première période, détecte que le processus de fermentation ne peut pas se produire correctement et que, par conséquent, le produit fermenté ne sera pas approprié à la consommation,
qui avertit l'utilisateur au moyen d'au moins une unité d'avertissement du dispositif de refroidissement,
qui permet de soumettre le compartiment, dans lequel le processus de fermentation doit être effectué, à un processus de préchauffage/refroidissement avant l'initiation du processus de fermentation, et ajuste ainsi la température du compartiment à la température qui convient au processus de fermentation,
pendant le processus de préchauffage/refroidissement, après que le produit fermenté à obtenir a été déterminé au moyen de l'élément de commande, qui reçoit la température du compartiment mesurée par ledit thermomètre avant que le mélange par lequel le produit fermenté doit être obtenu soit placé dans le compartiment, compare cette valeur de température mesurée avec une deuxième valeur de température et une troisième valeur de température qui est supérieure à la deuxième valeur de température, permet d'amener la température du compartiment à la troisième valeur de température si la valeur de température mesurée est égale ou inférieure à la deuxième valeur de température et permet d'amener la température du compartiment à la deuxième valeur de température si la valeur de température mesurée est égale ou supérieure à la troisième valeur de température, dans lequel la deuxième valeur de température et la troisième valeur de température constituent la plage de température de fermentation du produit fermenté déterminé pour le processus de fermentation,
qui fait opérer un dispositif de chauffage du dispositif de refroidissement afin d'amener la température du compartiment à la troisième valeur de température, et évite que l'ensemble de cycle de refroidissement n'effectue le processus de refroidissement.

11. Dispositif de refroidissement selon la revendication 10, **caractérisé en ce qu'il** comprend, en plus de l'ensemble de cycle de refroidissement, au moins un compresseur et au moins un évaporateur en connexion avec l'unité de commande, appropriés pour une utilisation pendant le processus de fermentation, et permettant à la température du compartiment, dans lequel le processus de fermentation est effectué, d'être ajustée et commandée de manière correspondante pour le processus de fermentation, et au moins un dispositif de chauffage pour ajuster et commander la température du compartiment pour le processus de fermentation.

12. Dispositif de refroidissement selon la revendication 10 ou la revendication 11, **caractérisé en ce qu'il** comprend au moins une batterie pour fournir de l'énergie à l'unité de commande et au thermomètre en cas de coupure de courant.
